Europäisches Patentamt

European Patent Office

Office européen des brevets

(11) Veröffentlichungsnummer : **0 038 980**
**B1**

(12) **EUROPÄISCHE PATENTSCHRIFT**

(45) Veröffentlichungstag der Patentschrift :
21.03.84

(21) Anmeldenummer : **81102755.6**

(22) Anmeldetag : **10.04.81**

(51) Int. Cl.³ : **B 23 K 9/02**

(54) **Vorrichtung zur Schmelzbadsicherung beim mechanisierten Schweissen in Zwangslage.**

(30) Priorität : **30.04.80 DE 3016582**

(43) Veröffentlichungstag der Anmeldung :
**04.11.81 Patentblatt 81/44**

(45) Bekanntmachung des Hinweises auf die Patenterteilung : **21.03.84 Patentblatt 84/12**

(84) Benannte Vertragsstaaten :
**BE DE FR GB SE**

(56) Entgegenhaltungen :
**DE-A- 2 603 020**
**DE-B- 1 165 786**

(73) Patentinhaber : **Eichhorn, Friedrich, Professor Dr.-Ing.**
**Fichthang 2**
**D-5100 Aachen (DE)**

(72) Erfinder : **Hirsch, Peter, Dr., Dipl.-Ing.**
**Schlossweiherstrasse 3-5 .**
**D-5100 Aachen-Laurensberg (DE)**
Erfinder : **Wübbels, Bernhard**
**Gemenwirthe 36**
**D-4280 Borken 1 (DE)**
Erfinder : **Thomson, Iwar**
**von-Coels-Strasse 258**
**D-5100 Aachen (DE)**

(74) Vertreter : **Kraus, Walter, Dr. et al**
**Patentanwälte Dres. Kraus & Weisert Irmgardstrasse 15**
**D-8000 München 71 (DE)**

EP 0 038 980 B1

Vorrichtung zur Schmelzbadsicherung beim mechanisierten Schweißen in Zwangslage

Die Erfindung betrifft eine Vorrichtung zur Schmelzbadsicherung beim mechanischen Schweißen in Zwangslage, insbesondere in aufrechter, zum Beispiel senkrechter Lage ; die Vorrichtung hat dabei gegen die Oberfläche der zu verschweißenden Werkstücke gedrückte, den Schweißstrom und die Schweißelektrode zuführende, unter Schweißgeschwindigkeit bewegte Gleitschuhe, die aus zwei in der wenigstens näherungsweise senkrechten Mittelebene des Schweißspalts zwischen den Werkstücken dicht aneinanderliegenden, gegeneinander beweglichen Segmenten bestehen.

Eine solche Vorrichtung ist in der deutschen Auslegeschrift 1 165 786 angegeben ; sie soll vor allem die Andrückkraft der zweigeteilten Gleitschuhe an die zu verschweißenden Werkstücke so beeinflussen, daß jene auch bei unregelmäßiger, zum Beispiel gekrümmter Form der Werkstücke immer optimal ist. Das Andrücken der Segmente geschieht dabei durch ein aufwendiges Hebelwerk mit einer einzigen Druckfeder je Seite ; da die Segmente in nur beschränktem Maß gegeneinander beweglich sind, kann bei großem Kantenversatz der beiden zu verschweißenden Werkstückkanten oder erheblicher Neigung der Werkstücke zueinander keine gute und gleichmäßige Schweißnaht erzeugt werden ; das seitliche Auslaufen von Schmelze kann nicht mit Sicherheit vermieden werden.

Mit der Vorrichtung gemäß der deutschen Auslegeschrift 1 096 515 und der deutschen Patentschrift 1 108 352 wird zwar eine gute seitliche Abdichtung des Schmelzbads erreicht ; da aber der direkt an der Schmelzlinie gelegene Bereich bei Blechunebenheiten nur ungenügend gekühlt wird, treten große Schwankungen der Einbrandtiefe auf. Die anderwärts bekannte Anbringung zusätzlicher Führungsbahnen erhöht die Nebenzeiten wesentlich und ist nicht für alle Anwendungsfälle geeignet.

Bei der in der deutschen Patentschrift 2 603 020 beschriebenen Schweißvorrichtung ist zwar durch Segmentierung der Gleitflächen eine gute Abdichtung gegen Auslaufen des Schmelzbads gewährleistet, indem hier die Gleitschuhsegmente einzeln und unabhängig voneinander beweglich an die Oberfläche je eines Werkstücks nachgiebig andrückbar sind, hier ist jedoch der Gleitschuh dreiteilig ausgebildet, und die Abdichtung wird durch eine Vielzahl von einzelnen Segmenten erreicht, die in ihrer Gesamtheit die Auflagefläche bilden ; wegen der großflächigen Reibung der einzelnen Gleitschuhsegmente aufeinander sind die Anpreßkräfte und damit die Abdichtkräfte großen Schwankungen unterworfen und damit nicht genau bestimmbar. Die aufliegenden Segmente werden in den beiden Seitenteilen des dreiteiligen Gleitschuhs geführt und können zwar einzeln und unabhängig voneinander an die Werkstückoberfläche gedrückt werden, wobei eine Dreh-und Kippbewegung jedoch unmöglich ist.

Aufgabe der Erfindung ist es, eine Vorrichtung der eingangs bezeichneten Art so zu verbessern, daß mit geringem Aufwand auch große Ungenauigkeiten bezüglich der Oberflächen der zu verschweißenden Werkstücke einwandfrei beherrscht werden, daß also auch in diesen Fällen eine gute Schweißnaht erzeugt wird.

Diese Aufgabe wird erfindungsgemäß dadurch gelöst, daß die Gleitschuhsegmente einzeln und unabhängig voneinander beweglich an die Oberfläche je eines Werkstücks nachgiebig andrückbar sind, wobei jedes Gleitschuhsegment mittels einer zur Mittelebene des Schweißspalts senkrechten Gelenkachse und einer weiteren zur genannten Mittelebene parallelen Gelenkachse sowie mittels den Gelenkachsen zugeordneten Schiebeführungen derart an einem gemeinsamen Halter geführt ist, daß jedes Gleitschuhsegment einzeln sowohl um jede der genannten Gelenkachsen kippbar als auch zu sich selbst parallel verschiebbar ist. Die in der vorgenannten Art einzeln und unabhängig voneinander bewegbar an die Oberfläche je eines Werkstücks nachgiebig angedrückten Gleitschuhsegmente gleichen jeden in der Praxis vorkommenden Fehler, insbesondere in der gegenseitigen Lage der Werkstücke, wie Kantenversatz und Neigung gegeneinander, mit Sicherheit aus, so daß immer eine gute Schweißnaht gewährleistet ist.

Um beim Zünden des Schweißprozesses ein Auslaufen des Metall- und Schlackenbads durch die gemeinsame Längsnut der beiden Segmente zu verhindern, kann die Vorrichtung nach der Erfindung so ausgebildet sein, daß an der Unterseite jedes Gleitschuhsegments ein Abdichtkörper federnd nachgiebig so befestigt ist, daß er von einer überhöhten Schweißraupe schräg nach unten zurückgedrückt wird, und daß diese Abdichtkörper in der Mittelebene des Schweißspalts dicht aneinanderliegend und in Verlängerung einer gemeinsamen mittigen Längsnut der Gleitschuhsegmente eine gemeinsame Längsnut aufweisen, die vor dem unteren Ende jedes Abdichtkörpers schräg ausläuft.

Außerdem ist es möglich, daß für besondere Anwendungsfälle an jedem Gleitschuhsegment seitlich je ein zusätzliches, in gleicher Weise aufgebautes Segment dicht und unabhängig beweglich angesetzt und mittels eines erweiterten gemeinsamen Halters befestigt ist.

Weiterhin kann eine Zusatzeinrichtung für das Schutzgasschweißen vorgesehen sein.

Nach der deutschen Patentschrift 1 140 297 und der deutschen Auslegeschrift 1 565 893 erfolgt die Schutzgaszufuhr durch den Gleitschuh in den Lichtbogenbereich des Schweißspalts. Dies hat den Nachteil, daß sich bei längeren Nähten und engeren Schweißspalten die Schutzgasöffnungen durch Spritzer mehr oder weniger zusetzen, was zu Turbulenzen führen kann, die zum Beispiel Poren im Schweißgut bewirken können. Um diesen Nachteil zu beseitigen, wird nach der Erfindung das Schutzgas direkt über dem Gleitschuh dem Schweißprozeß zugeführt. Hierzu ist die Vorrichtung nach der Erfindung so ausgebildet, daß auf jedes Gleitschuhsegment eine vorzugsweise in Strömungsrichtung erweiterte und am Ende umgebogene Schutzgas-Zufuhrdüse so aufgesetzt ist, daß diese in der Mittelebene des Schweißspalts gegeneinander beweglich dicht aneinanderliegen.

Zur Vermeidung einer Injektorwirkung ist die Gaszufuhr nach außen hin abgedichtet. Im einzelnen kann das in der Weise geschehen, daß die Schutzgas-Zufuhrdüsen wenigstens teilweise aus Leitblechen gebildet sind, die in einem mit je einem Gleitschuhsegment fest verbundenen Gehäuse gehalten sind, wobei vorzugsweise die hintere Stoßkante der beiden Schutzgas-Zufuhrdüsen von einer nachgiebigen Abdichtkappe überbrückt ist. Hierbei können die Gehäuse der Schutzgas-Zufuhrdüsen mit einem in der Mittelebene des Schweißspalts geteilten Kabinengehäuse zusammengebaut sein, dessen Teile an jeweils einem Gleitschuhsegment oben befestigt sind.

Mittels eines Druckwächters wird im Schweißbereich ein gewisser Überdruck aufrechterhalten, so daß Umgebungsluft nicht hinzutreten kann. Der Abdichtung zur Umgebung hin wird besondere Aufmerksamkeit gewidmet. Bei Ausbildung einer Schweißkabine mittels des Kabinengehäuses werden abgedichtete Schauöffnungen angebracht.

Die Schweißkabine kann so ausgebildet sein,

(a) daß das Kabinengehäuse eine Drahtelektroden-Zuführung trägt ;

(b) daß das Kabinengehäuse einen die Schutzgas-Zufuhr steuernden Druckwächter trägt ;

(c) daß das Kabinengehäuse oben eine Absaugöffnung für entweichendes Schutzgas und Rauchgas trägt ;

(d) daß wenigstens eines der beiden Teile des Kabinengehäuses eine mit einem Schauglas versehene Öffnung trägt ; und

(e) daß an den Gehäusen von Kabine und Schutzgas-Zufuhrdüsen seitlich je eine Abdichtleiste anliegt, die mittels Bolzen und damit zusammenwirkenden, in Richtung auf die Werkstücke verlaufenden Schlitzen geführt und durch Federn an die Werkstücke angedrückt werden, wobei die Federn zum Beispiel durch je einen Bolzen an jenen Gehäusen gehalten sind.

Schließlich kann die Ausbildung so sein, daß in der im Bereich des Schweißspalts liegenden gemeinsamen Längsnut der Gleitschuhsegmente Bohrungen zur Aufnahme von Phototransistoren oder Thermoelementen angebracht sind, die zur Steuerung der Schweißgeschwindigkeit und Schweißpulverzufuhr dienen, wodurch die Phototransistoren oder Thermoelemente gegen die Schweißhitze geschützt eingebaut sind. Diese und andere Weiterbildungen der Erfindung sind in den Unteransprüchen angegeben.

Die Erfindung wird im folgenden mit einigen bevorzugten Ausführungsbeispielen anhand der Zeichnungen näher erläutert ; dabei zeigen :

Figur 1 schematisch die Bewegungsmöglichkeiten der erfindungsgemäßen Vorrichtung ;

Figur 2 einen Längsschnitt durch eine zweigeteilte Vorrichtung gemäß der gebrochenen Linie II-II in Figur 3 ;

Figur 3 die Vorrichtung der Figur 2 in Ansicht von hinten ;

Figur 4 eine Vorrichtung mit vier Gleitschuhsegmenten mit den Bewegungsmöglichkeiten nach Figur 1, und zwar in Draufsicht ;

Figur 5 eine Vorrichtung mit zwei Gleitschuhsegmenten mit Schutzgaszufuhr für das Elektrogasschweißen, und zwar in Ansicht von vorn ;

Figur 6 einen Teillängsschnitt gemäß Linie III-III in Figur 5 ;

Figur 7 einen Teilquerschnitt gemäß Linie I-I in Figur 5 ;
und

Figur 8 eine Vorrichtung mit zwei Gleitschuhsegmenten mit Abdichteinrichtung für den Schweißbereich beim Elektrogasschweißen.

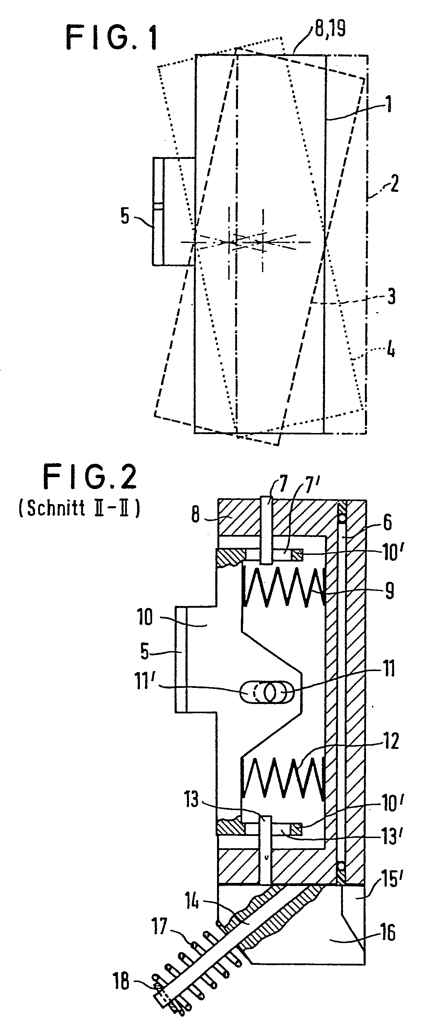

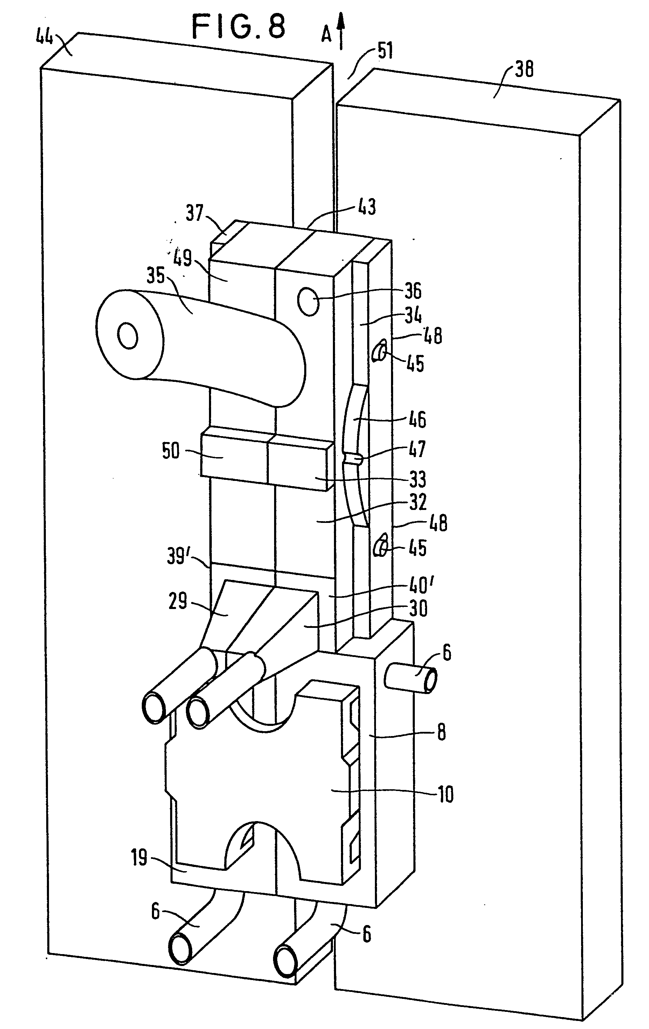

In Figur 1 sind schematisch die Bewegungsmöglichkeiten der Gleitschuhsegmente 8, 19 zu sehen. In einem in den Figuren 2, 3 und 8 dargestellten Halter 10, der auch die Führung der beiden in der Mittelebene des Schweißspalts 51 (siehe Figur 8) aneinanderliegenden Gleitschuhsegmente 8, 19 und die Kraftübertragung von einem nichtdargestellten Maschinengestell her übernimmt, kann sich jedes Gleitschuhsegment 8, 19 unabhängig vom anderen in zwei Richtungen bewegen, und zwar von einer Ausgangsstellung 1 aus, in der die Gleitschuhsegmente an die zu verschweißenden Werkstücke 38, 44 mit in einer Ebene liegenden Oberflächen angedrückt sind. Liegen beim Schweißvorgang diese Oberflächen nicht in einer Ebene, werden die Gleitschuhsegmente selbsttätig so bewegt, daß sie immer mit ihrer ganzen Fläche angedrückt bleiben. Bei einem parallelen Kantenversatz bewegt sich ein Gleitschuhsegment parallel nach vorn in die Stellung 2 und das andere Gleitschuhsegment nach hinten. Weicht die Kontur eines Bleches der Schweißung von der des anderen Bleches ab, so ist jedes Gleitschuhsegment in der Lage, sich parallel nach vorne in die Stellung 2 oder nach hinten zu bewegen oder eine Drehung auszuführen, wobei die Segmentoberkante im Uhrzeigersinn in die Stellung 3 oder gegen den Uhrzeigersinn in die Stellung 4 bewegt wird. Mit diesen Bewegungsmöglichkeiten lassen sich Blechunebenheiten, die größer sind als die Segmentlänge, und ein großer Kantenversatz mit Sicherheit ausgleichen.

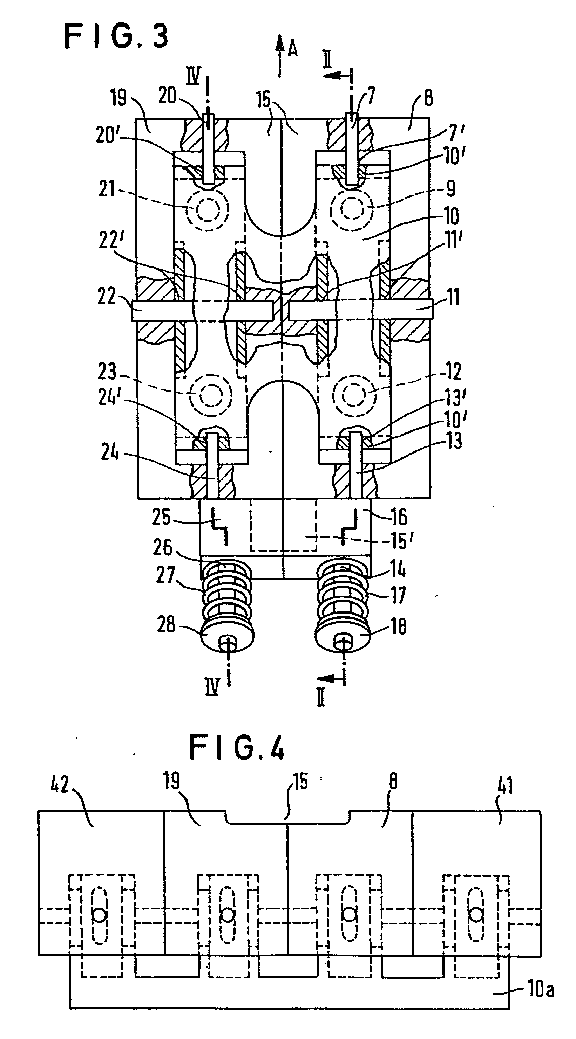

Eine Ausführungsform der gesamten Vorrichtung ist in den Figuren 2 und 3 dargestellt. In dem mit einem Ansatzstück 5 für die Befestigung in einem Maschinengestell versehenen Halter 10 sind die Gleitschuhsegmente 8, 19 durch je eine Gelenkachse 7, 13 bzw. 20, 24 verdrehbar, die jeweils von zwei in einer zur Mittelebene des Schweißspalts 51 parallelen Ebene II-II bzw. IV-IV gegenüberliegenden Stifen gebildet wird, welche seitlich in Schiebeführungen 7', 13' bzw. 20', 24' geführt sind, die von Schlitzen gebildet werden. Die Stifte sind fest an den Gleitschuhsegmenten 8, 19 angebracht. Die zugehörigen, in diesen Ebenen in Richtung auf die Werkstücke 38 bzw. 44 verlaufenden Schiebeführungen 7', 13' bzw. 20', 24' sind in je einem Vorsprung 10' des Halters 10 so bemessen, daß sie als Endanschläge dienen und keine Dehnung bzw. Längsverschiebung der Gleitschuhsegmente, wohl aber ein Kippen um ihre Mittelachse zulassen.

Je eine weitere Gelenkachse 11 bzs. 22, die von je einem zur Mittelebene des Schweißspalts 51 senkrechten Stift gebildet wird, greift in je zwei als weitere Schiebeführungen 11' bzw. 22' vorgesehene mittige Schlitze des Halters 10 ein; diese sind in zwei im Abstand voneinander befindlichen, zur Mittelebene des Schweißspalts 51 parallelen Ebenen in Richtung auf die Werkstücke verlaufend ausgebildet und weisen ebenfalls Endanschläge auf. Dadurch wird sowohl das Kippen wie die Parallelbewegung der Gleitschuhsegmente zugelassen, wobei die nötige Schweißvorschubkraft übertragen wird.

Vom Maschinengestell aus wird die erforderliche Andrückkraft über den Halter 10, jeweils zwei Druckfedern 9, 12 bzw. 21, 23 mit einstellbarer Vorspannung und die beiden Gleitschuhsegmente 8 bzw. 19 auf die Werkstücke 38 bzw. 44 übertragen, die zwischen sich den Schweißspalt 51 aufweisen. In diesem Bereich begrenzen die Gleitschuhsegmente in bekannter Weise eine gemeinsame Längsnut 15, welche die Ausbildung einer gut geformten Schweißnaht ermöglicht. Unterhalb der Gleitschuhsegmente sind zwei Abdichtkörper 16 bzw. 25 angebracht, die wie die Gleitschuhsegmente geteilt und mit jenen verbunden sind. Diese Abdichtkörper 16, 25 begrenzen ebenfalls eine gemeinsame Längsnut 15', die mit der Längsnut 15 fluchtet und vor dem unteren Ende jedes Abdichtkörpers 16, 25 schräg ausläuft. Die beiden Abdichtkörper 16, 25 werden durch schräg angeordnete Bolzen 14 bzw. 26 geführt. Jeweils eine Feder 17 bzw. 27, gehalten von einer Scheibe 18 mit Befestigungssplint 28, drückt die Abdichtkörper 16, 25 an das entsprechende Gleitschuhsegment 8 bzw. 19 nachgiebig an, so daß sie bei Auftreten einer überhöhten Schweißnaht durch ihre Längsnut zurückgedrückt werden, ohne daß die Abdichtwirkung nennenswert leidet.

Um eine bessere Abdichtwirkung besonders niedrigviskoser Schmelzen zu erreichen, werden gemäß Figur 4 an die beiden Gleitschuhsegmente 8, 19 seitlich zwei weitere Segmente 41 bzw. 42 dicht und unabhängig beweglich angehängt und in einem erweiterten gemeinsamen Halter 10a geführt. Diese zusätzlichen Segmente 41, 42 erhalten im allgemeinen keine Durchströmkanäle 6 für Kühlmittel wie die inneren Gleitschuhsegmente 8, 19, da den Werkstücken nicht zuviel Wärme entzogen werden soll; und diese zusätzlichen Segmente 41 und 42 sind vorzugsweise in der gleichen Art an dem Halter 10a angebracht wie die Gleitschuhsegmente 8 und 19.

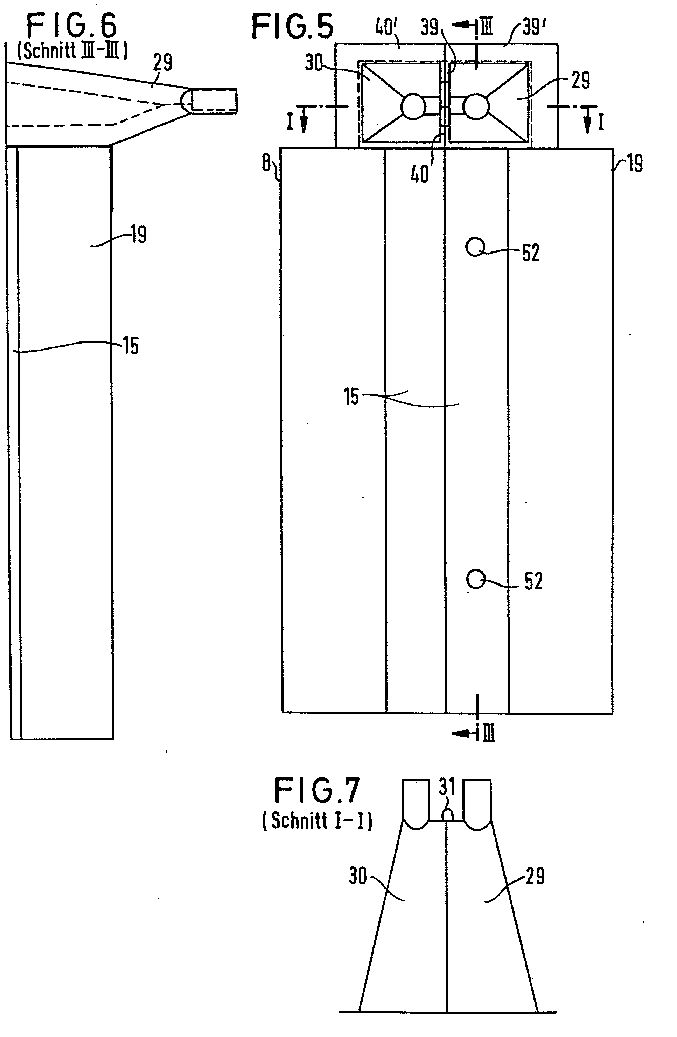

In den Figuren 5 bis 7 ist eine Vorrichtung mit Schutzgaszufuhr für das Elektroschweißen dargestellt. Schutzgaszuführdüsen 29, 30 sind auf den Gleitschuhsegmenten 8 bzw. 19 so angebracht, daß sie deren Bewegungen mitmachen; sie sind deshalb in gleicher Weise in der Mittelebene der Schweißnaht 51 getrennt ausgebildet und mit Leitblechen 39 bzw. 40 so ausgelegt, daß sie gegenüber der Umgebung abgedichtet sind. Deshalb ist auch die hintere Stoßkante dieser Schutzgaszuführdüsen 29, 30 von einer nachgiebigen Abdichtkappe 31 überbrückt. Um die Austrittsgeschwindigkeit des Schutzgases herabzusetzen, sind die Schutzgaszuführdüsen 29, 30 trichterförmig erweitert. Um eine unerwünschte Injektorwirkung zu verhindern, sind die Ausströmenden der Schutzgaszuführdüsen 29, 30 umgebogen, so daß sie nicht direkt auf die Schweißstelle gerichtet sind.

Für das Elektrogasschweißen ist es günstig, wenn für den Schweißbereich ein kleines, in gleicher Weise wie die Gleitschuhsegmente geteiltes und mit jenen verbundenes Kabinengehäuse aus den Teilen 32 und 49, die als Segmente ausgebildet sind, verwendet wird, wie es in Figur 8 dargestellt ist. Die Schutzgaszuführdüsen 29, 30 sind dann in den Teilen 32, 49 integriert. Durch seitliche Abdichtleisten 34 bzw. 37 wird der Schutzgasverlust äußerst gering gehalten; sie werden durch jeweils zwei Bolzen 45 in je einem Schlitz 48 geführt und durch je eine Feder 46 an die Werkstücke 38 bzw. 44 gedrückt. Die Federn 46 werden dabei durch je einen Bolzen 47 an dem Kabinengehäuse gehalten. Durch je eine Öffnung 33 bzw. 50 in dem Kabinengehäuse, die mit einem Schauglas verschlossen ist, läßt sich der Schweißprozeß gut beobachten.

Ein an dem Kabinengehäuse aus den Teilen 32, 49 angebrachter Druckwächter 36 hält in ihm dauernd einen geringen Schutzgasüberdruck aufrecht. Durch die Kabinenwand ist ferner eine Drahtelektrodenzuführung 35 hindurchgeführt. Zur Absaugung entweichenden Schutzgases und Rauchgases ist an dem Kabinengehäuse eine Absaugöffnung 43 angebracht.

**Ansprüche**

1. Vorrichtung zur Schmelzbadsicherung beim mechanisierten Schweißen in Zwangslage, insbesondere in aufrechter, zum Beispiel in senkrechter Lage, mit gegen die Oberfläche der zu verschweißenden Werkstücke (38, 44) gedrückten, den Schweißstrom und die Schweißelektrode zuführenden, unter Schweißgeschwindigkeit bewegten Gleitschuhen, die aus zwei in der wenigstens näherungsweise senkrechten Mittelebene des Schweißspalts (51) zwischen den Werkstücken (38, 44) dicht aneinander anliegenden, gegeneinander beweglichen Gleitschuhsegmenten (8, 19) bestehen, dadurch gekennzeichnet, daß die Gleitschuhsegmente (8, 19) einzeln und unabhängig voneinander beweglich an die Oberfläche je eines Werkstücks (38 bzw. 44) nachgiebig andrückbar sind, wobei jedes Gleitschuhsegment (8 bzw. 19) mittels einer zur Mittelebene des Schweißspalts (51) senkrechten Gelenkachse (11 bzw. 22) und einer weiteren zur genannten Mittelebene parallelen Gelenkachse (7, 13 bzw. 20, 24) sowie mittels den Gelenkachsen (7, 13 bzw. 20, 24 ; 11 bzw. 22) zugeordneten Schiebeführungen (7', 13', 20', 24' ; 11', 22') derart an einem gemeinsamen Halter (10) geführt ist, daß jedes Gleitschuhsegment (8 bzw. 19) einzeln sowohl um jede der genannten Gelenkachsen (7, 13 bzw. 20, 24 ; 11 bzw. 22) kippbar als auch zu sich selbst parallel verschiebbar ist.

2. Vorrichtung nach Anspruch 1, dadurch gekennzeichnet, daß der gemeinsame Halter (10) mittels eines Ansatzstücks (5) in einem Maschinengestell in Längsrichtung (A) des Schweißspalts (51) verschiebbar angeordnet ist.

3. Vorrichtung nach Anspruch 1 oder 2, dadurch gekennzeichnet, daß die zur Mittelebene des Schweißspalts (51) senkrechten Gelenkachsen (11 bzw. 22) Stifte umfassen, die je in wenigstens einen als Schiebeführung (11', 22') vorgesehenen mittigen Schlitz im gemeinsamen Halter (10) eingreifen, der in einer zur Mittelachse des Schweißspalts parallelen Ebene in Richtung auf das Werkstück (38 bzw. 44) verlaufend ausgebildet ist und gegebenenfalls einstellbare Endanschläge aufweist.

4. Vorrichtung nach Anspruch 1, 2 oder 3, dadurch gekennzeichnet, daß die zur Mittelebene des Schweißspalts (51) parallelen Gelenkachsen (7, 13 bzw. 20, 24) je zwei in einer zur Mittelachse des Schweißspalts (51) parallelen Ebene gegenüberliegende Stifte umfassen, die in je einen in dieser Ebene in Richtung auf das Werkstück (38, 44) verlaufenden, als Schiebeführung (7', 13', 20', 24') vorgesehenen Schlitz eingreifen, wobei diese Schlitze an einem Vorsprung (10') des gemeinsamen Halters (10), gegebenenfalls mit einstellbaren Endanschlägen, ausgebildet sind.

5. Vorrichtung nach einem der Ansprüche 1 bis 4, dadurch gekennzeichnet, daß zwischen jedem Gelitschuhsegment (8, 19) und dem gemeinsamen Halter (10) Druckfedern (9, 12 bzw. 21, 23), insbesondere Pneumatik- oder Hydraulikzylinder, angebracht sind.

6. Vorrichtung nach einem der Ansprüche 1 bis 5, dadurch gekennzeichnet, daß die Gleitschuhsegmente (8, 19) Durchströmkanäle (6) für ein Kühlmittel aufweisen.

7. Vorrichtung nach einem der Ansprüche 1 bis 6, dadurch gekennzeichnet, daß an der Unterseite jedes Gleitschuhsegments (8, 19) ein Abdichtkörper (16 bzw. 25) federnd nachgiebig so befestigt ist, daß er von einer überhöhten Schweißraupe schräg nach upten zurückgedrückt wird, und daß diese Abdichtkörper in der Mittelebene des Schweißspalts (51) dicht aneinanderliegend und in Verlängerung einer gemeinsamen mittigen Längsnut (15) der Gleitschuhsegmente eine gemeinsame Längsnut (15') aufweisen, die vor dem unteren Ende jedes Abdichtkörpers (16, 25) schräg ausläuft.

8. Vorrichtung nach Anspruch 7, dadurch gekennzeichnet, daß die Abdichtkörper (16, 25) durch je einen schräg nach unten hinten weisenden, im zugehörigen Gleitschuhsegment (8 bzw. 19) befestigten Bolzen (14 bzw. 26) geführt und durch eine Feder (17 bzw. 27) mit Scheibe und Befestigungssplint (18 bzw. 28) an jenes angedrückt sind (Figur 3).

9. Vorrichtung nach einem der Ansprüche 1 bis 8, dadurch gekennzeichnet, daß an jedem Gleitschuhsegment (8, 19) seitlich je ein zusätzliches, in gleicher Weise aufgebautes Segment (41 bzw. 42) dicht und unabhängig beweglich angesetzt und mittels eines erweiterten gemeinsamen Halters (10a) befestigt ist (Figur 4).

10. Vorrichtung nach einem der Ansprüche 1 bis 9, dadurch gekennzeichnet, daß auf jedes Gleitschuhsegment (8, 19) eine vorzugsweise in Strömungsrichtung erweiterte und am Ende umgebogene Schutzgas-Zufuhrdüse (30 bzw. 29) so aufgesetzt ist, daß diese in der Mittelebene des Schweißspalts (51) gegeneinander beweglich dicht aneinanderliegen (Figur 5).

11. Vorrichtung nach Anspruch 10, dadurch gekennzeichnet, daß die Schutzgas-Zufuhrdüsen (30, 29) wenigstens teilweise aus Leitblechen (40 bzw. 39) gebildet sind, die in einem mit je einem Gleitschuhsegment (8 bzw. 19) fest verbundenen Gehäuse (40' bzw. 39') gehalten sind.

12. Vorrichtung nach Anspruch 10 oder 11, dadurch gekennzeichnet, daß die hintere Stoßkante der beiden Schutzgas-Zufuhrdüsen (30, 29) von einer nachgiebigen Abdichtkappe (31) überbrückt ist (Figur 7).

13. Vorrichtung nach einem der Ansprüche 10 bis 12, dadurch gekennzeichnet, daß die Gehäuse (40', 39') der Schutzgas-Zufuhrdüsen (30 bzw. 29) mit einem in der Mittelebene des Schweißspalts (51) geteilten Kabinengehäuse zusammengebaut sind, dessen Teile (32, 49) an jeweils einem Gleitschuhsegment (8 bzw. 19) oben befestigt sind (Figur 8).

14. Vorrichtung nach Anspruch 13, dadurch gekennzeichnet, daß das Kabinengehäuse eine Drahtelektroden-Zuführung (35) trägt.

15. Vorrichtung nach Anspruch 13 oder 14, dadurch gekennzeichnet, daß das Kabinengehäuse einen die Schutzgas-Zufuhr steuernden Druckwächter (36) trägt.

16. Vorrichtung nach einem der Ansprüche 13 bis 15, dadurch gekennzeichnet, daß das Kabinengehäuse oben eine Absaugöffnung (43) für entweichendes Schutzgas und Rauchgas trägt.

17. Vorrichtung nach einem der Ansprüche 13 bis 16, dadurch gekennzeichnet, daß wenigstens eines der beiden Teile (32, 49) des Kabinengehäuses eine mit einem Schauglas versehene Öffnung (33 bzw. 50) trägt.

18. Vorrichtung nach einem der Ansprüche 13 bis 17, dadurch gekennzeichnet, daß an den Gehäusen (32, 40' bzw. 49, 39') von Kabine und Schutzgas-Zufuhrdüsen seitlich je eine Abdichtleiste (34 bzw. 37) anliegt, die mittels Bolzen (45) und damit zusammenwirkenden, in Richtung auf die Werkstücke (38 bzw. 44) verlaufenden Schlitzen (48) geführt und durch Federn (46) an die Werkstücke angedrückt werden, wobei die Federn zum Beispiel durch je einem Bolzen (47) an jenen Gehäusen gehalten sind.

19. Vorrichtung nach einem der Ansprüche 1 bis 18, dadurch gekennzeichnet, daß in der im Bereich des Schweißspalts (51) liegenden gemeinsamen Längsnut (15) der Gleitschuhsegmente (8, 19) Bohrungen (52) zur Aufnahme von Phototransistoren oder Thermoelementen angebracht sind, die zur Steuerung der Schweißgeschwindigkeit und Schweißpulverzufuhr dienen.

### Claims

1. An apparatus which, during mechanical welding, secures the melting bath in a constrained position, in particular in an upright position, for example in a vertical position, having sliding shoes which are pressed against the surface of the workpieces to be welded (38, 44), supply the welding current and the welding electrode, and are moved at the welding speed and comprise two sliding shoe segments (8, 19) which lie closely adjacent in the at least approximatly vertical centre plane of the welding gap (51) between the workpieces (38, 44) and move with respect to one another, characterised in that the sliding shoe segments (8, 19), moving individually and independently of one another, may be pressed flexibly on the surface of each of the workpieces (38 and 44), and each segment (8 or 19) is guided on a common support (10) by an articulated axle (11 or 22), perpendicular to the centre plane of the welding gap (51), by another articulated axle (17, 13 or 20, 24) parallel to the above-mentioned centre plane and by sliding guide devices (7', 13' 20', 24' ; 11', 22') allocated to the articulated axles (7, 13, or 20, 24 ; 11 or 24), such that each sliding shoe segment (8, 19) may be tilted individually around each of the above-mentioned articulated axles (7, 13 or 20, 24 ; 11 or 22) and may also be moved parallel to itself.

2. An apparatus according to claim 1, characterised in that the common support (10) is designed so that it is moveable in a machine frame in the longitudinal direction (A) of the welding gap (51) by a joining piece (5).

3. An apparatus according to claim 1 or 2, characterised in that the articulated axles (11 or 22) which are perpendicular to the centre plane of the welding gap (51) have pins, each of which engages in at least one centre slit, provided as a sliding guide device (11', 22') in the common support (10), and which slit is designed to run towards the workpiece (38 or 44) in a plane parallel to the centre axis of the welding gap and optionally has adjustable end stops.

4. An apparatus according to claims 1, 2 or 3, characterised in that each of the articulated axles (7, 13 or 20, 24) which are parallel to the centre plane of the welding gap (51) comprises two opposite pins in a plane which is parallel to the centre axis of the welding gap (51), which engage in each slit, provided as a sliding guide device (7', 13', 20', 24') and running in this plane towards the workpiece (38, 44), and these slits are formed in a projection (10') of the common support (10), optionally with adjustable end stops.

5. An apparatus according to one of claims 1 to 4, characterised in that pressure springs (9, 12 or 21, 23), in particular pneumatic of hydraulic cylinders, are positioned between each sliding shoe segment (8, 19) and the common support (10).

6. An apparatus according to one of claims 1 to 5, characterised in that the sliding shoe segments (8, 19) have throughflow channels (6) for a cooling agent.

7. An apparatus according to one of claims 1 to 6, characterised in that a sealing body (16 or 25) is secured in a resilient and flexible manner to the underside of each sliding shoe segment (8, 19) so that it will be pushed back obliquely downwards by a raised welding bead, and these sealing bodies which lie closely together in the centre plane of the welding gap (51) have in the extension of a common central longitudinal groove (15) of the sliding shoe segments a common longitudinal groove (15') which runs out obliquely in front of the lower end of each sealing body (16, 25).

8. An apparatus according to claim 7, characterised in that each sealing body (16, 25) is guided by a bolt (14 or 26) which points obliquely downwards and is secured in the appropriate sliding shoe segment (18 or 19) and is pressed against each segment by a spring (17) or (27) which has a disc and a mounting pin (18 or 28) (see Figure 3).

9. An apparatus according to one of claims 1 to 8, characterised in that an additional similarly constructed segment (41 or 42) is attached to the side of each sliding shoe segment (8, 19) in a close and independently movable manner and is secured by an expanded common support (10a) (Figure 4).

10. An apparatus according to one of claims 1 to 9, characterised in that an inert gas supply nozzle (30 of 29) which is curved round at the end and preferably expands in the direction of flow is attached to each sliding shoe segment (8, 19) in such a way that they lie closely together and move with respect to one another in the centre plane of the welding gap (51) (Figure 5).

11. An apparatus according to claim 10, characterised in that the inert gas supply nozzles (30, 29) are formed at least partly by baffle plates (40 or 39) which are held in a housing (40' or 39') which is firmly connected to each sliding shoe segment (8 or 19).

12. An apparatus according to claim 10 or 11, characterised in that the rear edges of the two inert gas supply nozzles (30, 29) are spanned by a flexible sealing cap (31) (Figure 7).

13. An apparatus according to one of claims 10 to 12, characterised in that the housings (40', 39') of the inert gas supply nozzles (30 or 29) are assembled with a cabin housing which is split down the centre plane of the welding gap (51), the parts (32, 49) of which are each secured at the top of a sliding shoe segment (8 or 19) (Figure 8).

14. An apparatus according to claim 13, characterised in that the cabin housing has an electrode wire supply (35).

15. An apparatus according to claim 13 or 14, characterised in that the cabin housing has a pressure control device which controls the supply of inert gas.

16. An apparatus according to one of claims 13 to 15, characterised in that the cabin housing has a suction opening (43) for inert gas and flue gas which escapes.

17. An apparatus according to one of claims 13 to 16, characterised in that at least one of the two parts (32, 49) of the cabin housing has an opening (33) or (50) which is provided with an inspection glass.

18. An apparatus according to one of claims 13 to 17, characterised in that a sealing strip (34 or 37) is fitted to the side of each of the housings (32, 40' or 49, 39') of the cabin and the inert gas supply nozzles, and the strips are guided by bolts (45) and slits (48) which co-operate with the bolts (45) and run towards the workpieces (38 or 44) and are pressed by springs (46) against the workpieces, and each of the springs is held to these housings, for example by a bolt (47).

19. An apparatus according to one of claims 1 to 18, characterised in that bores (52) are made in the common longitudinal groove (15) of the sliding shoe segments (8, 19), lying in the region of the welding gap (51), to accommodate phototransistors or thermoelements which are used to control the welding speed and the supply of welding powder.

## Revendications

1. Dispositif pour contenir un bain de soudure en soudure mécanisée en position de contrainte, notamment en position droite, par exemple en position verticale, avec des patins mus à la vitesse de soudage, appuyés contre la surface des pièces à souder (38, 44) et amenant le courant de soudage et l'électrode de soudage, qui sont constitués de deux segments de patins (8, 19) mobiles l'un par rapport à l'autre et venant en contact étanche l'un contre l'autre dans le plan central au moins approximativement vertical de la fente de soudage (51) entre les pièces (38, 44), caractérisé en ce que les segments de patins (8, 19) peuvent être appliqués de façon souple contre la surface de chaque pièce (38 resp. 44) de façon individuelle et mobile de façon indépendante l'un par rapport à l'autre, chaque segment de patin (8 resp. 19) étant guidé sur un support commun (10) à l'aide d'un axe articulé (11 resp. 22) perpendiculaire au plan central de la fente de soudage (51) et d'un autre axe articulé (7, 13 resp. 20, 24) parallèle audit plan central ainsi qu'à l'aide des guides de coulissement (7', 13' resp. 20', 24' ; 11' resp. 22') associés aux axes articulés (7, 13 resp. 20, 24 ; 11 resp. 22), de telle sorte que chaque segment de patin (8 resp. 19) peut, de façon individuelle, aussi bien pivoter autour de chacun desdits axes articulés (7, 13 resp. 20, 24 ; 11 resp. 22) que coulisser parallèlement à lui-même.

2. Dispositif selon la revendication 1, caractérisé en ce que le support commun (10) est disposé dans un bâti de machine à l'aide d'une pièce en saillie (5) de façon à pouvoir coulisser selon la direction longitudinale (A) de la fente de soudage (51).

3. Dispositif selon la revendication 1 ou 2, caractérisé en ce que les axes articulés (11 resp. 22) perpendiculaires au plan central de la fente de soudage (51) comprennent des goupilles qui viennent en prise chacun dans au moins une fente centrale prévue en tant que guide de coulissement (11', 22') dans le support commun (10), qui est réalisée de façon à s'étendre dans le plan parallèle à l'axe central de la fente de soudage en direction de la pièce (38 resp. 44) et présente éventuellement des butées d'extrémité réglables.

4. Dispositif selon la revendication 1, 2 ou 3 caractérisé en ce que les axes articulés (7, 13, 20, 24) parallèles au plan central de la fente de soudage (51) comprennent chacun deux goupilles situées de façon opposée dans un plan parallèle à l'axe central de la fente de soudage (51) qui viennent en prise respectivement dans une fente prévue en tant que guide de coulissement (7', 13', 20', 24') et s'étendant dans ce plan en direction de la pièce (38, 44), ces fentes étant réalisées dans un élément de saillie (10') du support commun (10), éventuellement avec des butées d'extrémité réglables.

5. Dispositif selon l'une des revendications 1 à 4, caractérisé en ce que des ressorts de pression (9, 12, 21, 23), en particulier des cylindres pneumatiques ou hydrauliques, sont montés entre chaque segment de patin (8, 19) et le support commun (10).

6. Dispositif selon l'une des revendications 1 à 5, caractérisé en ce que les segments de patins (8, 19) présentent des canaux de passage (6) pour un agent de refroidissement.

7. Dispositif selon l'une des revendications 1 à 6, caractérisé en ce qu'un corps d'étanchéité (16, 25) est fixé de façon élastique et souple sur la face intérieure de chaque élément de patin (8, 19) de telle sorte qu'il est repoussé en biais vers le bas par une torsade de soudure surélevée, et en ce que ces corps d'étanchéité sont en contact étanche dans le plan central de la fente de soudage (51) et présentent en prolongement d'une rainure longitudinale commune centrale (15) des segments de patins une rainure longitudinale commune (15') qui s'étend en biais devant le bord inférieur de chaque corps d'étanchéité (16, 25).

8. Dispositif selon la revendication 7, caractérisé en ce que les corps d'étanchéité (16, 25) sont guidés chacun par un boulon (14, 26) fixé dans le segment de patin (8, 19) associé et partant en biais vers le bas arrière et sont appliqués contre chacun d'eux par un ressort (17, 27) avec rondelle et goupille de fixation (18, 28) — (figure 3).

9. Dispositif selon l'une des revendications 1 à 8, caractérisé en ce qu'un segment supplémentaire (41, resp. 42) de structure similaire est rapporté latéralement de façon étanche et mobile à mobilité indépendante à chaque segment de patin (8, 19) et en ce qu'il est fixé à l'aide d'un support commun élargi (10a).

10. Dispositif selon l'une des revendications 1 à 9, caractérisé en ce qu'une buse d'alimentation en gaz de protection, élargie de préférence dans le sens du flux et recourbée à l'extrémité (30 resp. 29) est montée de telle sorte qu'elle est en contact étanche avec une mobilité relative dans le plan central de la fente de soudure (51) (figure 5).

11. Dispositif selon la revendication 10, caractérisé en ce que les buses d'alimentation en gaz de protection (30, 29) sont formées au moins partiellement en tôles de guidage (40 resp. 39) qui sont maintenues dans un boîtier (40' resp. 39') fixé respectivement avec un segment de patin (8, 19).

12. Dispositif selon la revendication 10 ou 11, caractérisé en ce que le bord arrière des deux buses d'alimentation en gaz de protection (30, 29) est raccordé par une calotte d'étanchéité souple (31) (figure 7).

13. Dispositif selon l'une des revendications 10 à 12, caractérisé en ce que les boîtiers (40', 39') des buses d'alimentation en gaz de protection (30 resp. 29) sont construits ensemble avec un boîtier de cabine coupée dans le plan central de la fente de soudage (51), dont les parties (32, 49) sont respectivement fixées en haut à un segment de patin (8 resp. 19) (figure 8).

14. Dispositif selon la revendication 13, caractérisé en ce que le boîtier de cabine porte une alimentation d'électrode à fil (35).

15. Dispositif selon la revendication 13 ou 14, caractérisé en ce que le boîtier de cabine supporte un manomètre (36) contrôlant l'alimentation en gaz de protection.

16. Dispositif selon l'une des revendications 13 à 15, caractérisé en ce que le boîtier de cabine porte en haut une ouverture d'aspiration (43) pour le gaz de protection qui s'échappe et les gaz brûlés.

17. Dispositif selon l'une des revendications 13 à 16, caractérisé en ce qu'au moins une des deux parties (32, 49) du boîtier de cabine comporte une ouverture (33 resp. 50) munie d'une vitre d'observation.

18. Dispositif selon l'une des revendications 13 à 17, caractérisé en ce qu'une baquette d'étanchéité (34 resp. 37) est appliquée respectivement aux boîtiers (32, 40' resp. 49, 39') de la cabine et des buses d'alimentation en gaz de protection, baguettes qui sont guidées à l'aide de boulons (45) et de rainures (48) coopérant avec eux, qui s'étendent en direction des pièces (38 resp. 44), et sont appliquées contre les pièces par des ressorts (46), les ressorts étant par exemple maintenus sur chaque boîtier par respectivement un boulon (47).

19. Dispositif selon l'une des revendications 1 à 18, caractérisé en ce que les alésages (52) sont pratiqués dans la rainure longitudinale (15) des segments de patins (8, 19), se trouvant dans le voisinage de la fente de soudage (51), pour recevoir des phototransistors ou des thermoéléments, qui servent à la commande de la vitesse de soudage et de l'alimentation en poudre de soudure.

# FIG. 1

# FIG. 2

(Schnitt II-II)

# F I G. 3

# F I G. 4

# FIG.6
(Schnitt Ⅲ-Ⅲ)

# FIG.5

# FIG.7
(Schnitt I-I)

# FIG.8

A